# EUROPEAN PATENT SPECIFICATION

(11) **EP 2 895 928 B1**
(45) Date of publication and mention of the grant of the patent: **31.10.2018**
(21) Application number: 13773926.4
(22) Date of filing: 17.09.2013
(51) Int. Cl.: G05B 23/02

(54) **ARCHITECTURE FOR TURBINE SYSTEM DIAGNOSIS BASED ON SENSOR DATA**
ARCHITEKTUR FÜR TURBINENSYSTEMDIAGNOSE AUF DER BASIS VON SENSORDATEN
ARCHITECTURE DE DIAGNOSTIC DE SYSTÈME DE TURBINE BASÉE SUR DES DONNÉES DE CAPTEURS

(30) Priority: 17.09.2012 US 201261701813 P
(43) Date of publication of application: 22.07.2015
(73) Proprietor: Siemens Corporation, Iselin, NJ 08830 (US)
(72) Inventor: MENG, Yunsong, Tempe, Arizona 85281 (US); TECUCI, Dan G., Plainsboro, New Jersey 08536 (US)
(74) Representative: Isarpatent
(86) International application number: PCT/US2013/060086
(87) International publication number: WO 2014/043672

(56) References cited:
- US-A1- 2008 147 361
- US-A1- 2009 192 767
- US-A1- 2010 153 080
- TRAVE-MASSUYES L ET AL: "Gas-turbine condition monitoring using qualitative model-based diagnosis", IEEE EXPERT, IEEE SERVICE CENTER, NEW YORK, NY, US, vol. 12, no. 3, 1 June 1997 (1997-06-01), pages 22-31, XP002452713, ISSN: 0885-9000, DOI: 10.1109/64.590070

## Description

### BACKGROUND OF THE INVENTION

### 1. Technical Field

The present invention relates to sensor-based diagnosis, and more particularly, to a system of diagnosing turbine systems based on sensor data.

### 2. Discussion of the Related Art

A turbine is a rotary mechanical device that extracts energy from a fluid flow and converts it to useful work. The fluid may be liquid or gas. A turbine is a turbomachine with at least one moving part called a rotor assembly, which is a shaft or drum with blades attached. Moving fluid acts on the blades so that they move and impart rotational energy to the rotor. Turbine examples include steam turbines, gas turbines, transonic turbines, contra-rotating turbines, statorless turbines, ceramic turbines, shrouded turbines, shroudless turbines, bladeless turbines, water turbines and wind turbines.

As an example, a wind turbine converts kinetic energy from the wind, also called wind energy, into mechanical energy in a process known as wind power. Large grid-connected arrays of wind turbines are becoming an increasingly important source of wind power-produced commercial electricity.

FIG. 1 is an example of a wind turbine system 100. The wind turbine system 100 may include blades 1, a rotor 2, a blade pitch 3, a brake 4, a low-speed shaft 5, a gear box 6, a generator 7, a controller 8, an anemometer 9, a wind vane 10, a nacelle 11, a high-speed shaft 12, a yaw drive 13, a yaw motor 14 and a tower 15.

FIG. 2 is an example of turbine system diagnosis. Although FIG. 2 shows a wind turbine system 210 as the system under diagnosis, the illustrated diagnosis approach is applicable to most turbine systems.

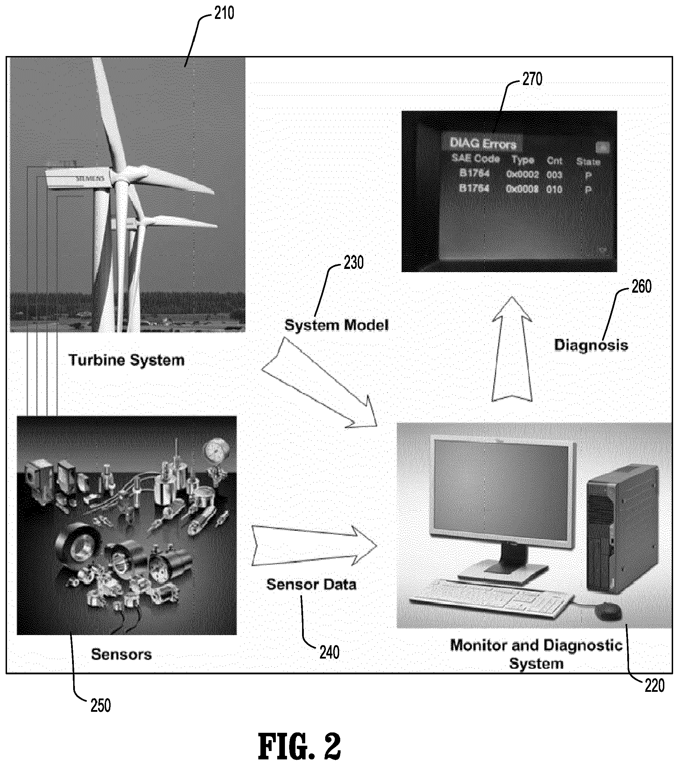

As shown in FIG.2, a monitor and diagnostic system 220 may receive a system model 230 of the wind turbine system 210 and sensor data 240 from sensors 250 of the wind turbine system 210. The system model 230 of the wind turbine system 210 may include models of the system's components, a description of how the components are connected, intended/unintended behaviors of the system and known failures of the system. Mode data may also be provided from the wind turbine system 210. The sensors 250 may be directly coupled with the system's components or strategically placed. The monitor and diagnosis system 220 may output a diagnosis 260 for visual display 270.

A diagnosis system may be model-based or data driven. A model-based system relies on a model of a system, how system components are connected, how they are intended to function, etc. A data-driven system may make a diagnosis based solely on sensor data. System models include dependency models such as Qualtech Systems' Testability, Engineering, and Maintenance System (TEAMS), eXpress by DSI International and "G2 : A Graph Processing System for Diagnosing Distributed Systems," Gou et al., 2011 (G2), logical models such as Propositional Satisfiability (SAT), Communicating Sequential Processes (CSP), Satisfiability Modulo Theories (SMT), Prolog, Description Logic (DL) and Answer Set Programming (ASP), and hybrid models such as Hybrid Diagnosis Engine (HyDE). System mode can be detected by using expert systems such as G2 and Spacecraft Health Inference Engine (SHINE), data-driven approaches, logical models such as SAT, CSP, Prolog, DL and ASP, and hybrid models such as HyDE.

U.S. Patent Publication No. 2008/147361 discloses a method of monitoring a system that includes identifying a plurality of subsystems associated with the system. Each of the plurality of subsystems is configured to receive at least one input signal and at least one output signal and has at least one predetermined limit. The method also includes generating a plurality of subsystem models by generating at least one subsystem model of each of the plurality of subsystems. Each of the subsystem models are at least partially formed from the first input signals and the first output signals. The method further includes generating at least one system model having at least one predetermined limit by integrating the plurality of subsystem models. At least one of the subsystem models is bounded by at least one predetermined limit of at least one other subsystem model, and/or at least one predetermined limit of the system model.

### SUMMARY OF THE INVENTION

The object of the present invention is to provide a method for diagnosing a turbine system as defined in claim 1, a system for diagnosing a turbine system according to claim 8 and a computer program product as defined in claim 15.

Advantageous embodiments of the invention are defined in the dependent claims.

### BRIEF DESCRIPTION OF THE DRAWINGS

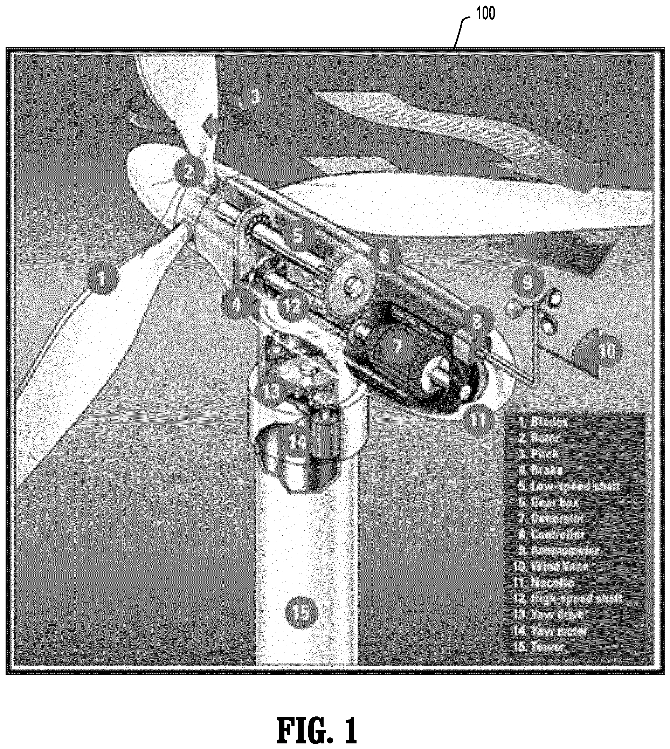

FIG. 1 is an example of a wind turbine system;
FIG. 2 is an example of turbine system diagnosis;

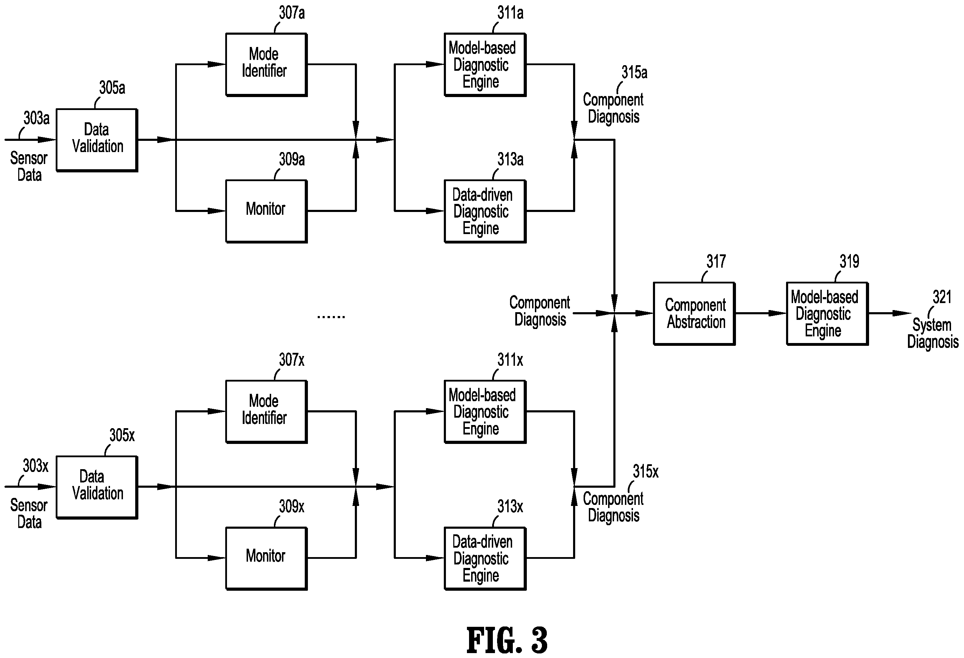

FIG. 3 is a turbine system diagnosis architecture according to an exemplary embodiment of the present invention;

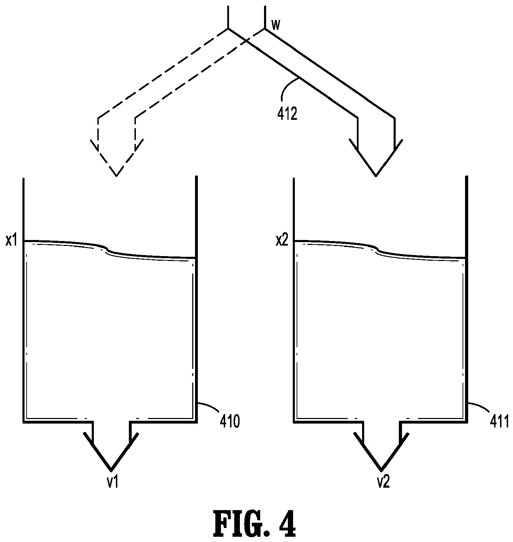

FIG. 4 is a schematic diagram illustrating the diagnosis approach of FIG. 3; and

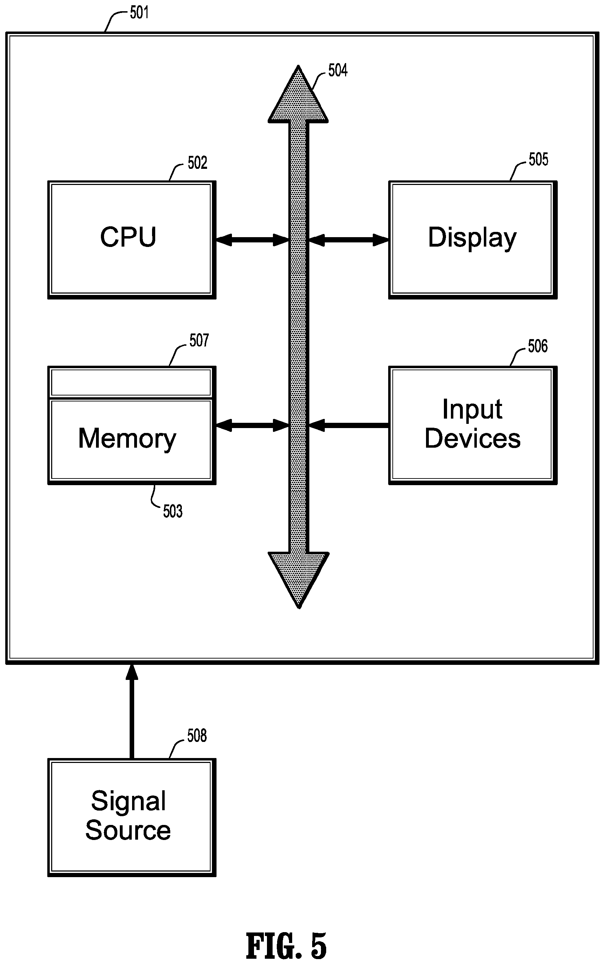

FIG. 5 is a computer system in which an exemplary embodiment of the present invention may be implemented.

### DETAILED DESCRIPTION OF EXEMPLARY EMBODIMENTS

The present invention is directed to a turbine system diagnosis architecture. The turbine system diagnosis architecture of the present invention is applicable to all turbine systems including, but not limited to, steam turbines, gas turbines, transonic turbines, contra-rotating turbines, statorless turbines, ceramic turbines, shrouded turbines, shroudless turbines, bladeless turbines, water turbines and wind turbines.

FIG. 3 is a turbine system diagnosis architecture according to an exemplary embodiment of the present invention.

As shown in FIG. 3, sensor data 303a is received at a diagnostic system and validated 305a. The sensor data 303a is provided from a sensor connected with a component (e.g., a first component) of a plurality of components of a turbine system. For example, the sensor could be a command sensor, a measurement sensor for monitoring temperature, pressure flow, etc. The sensor data may include numeric values at various time intervals. The sensor data 303a is validated so that the data they output can be trusted. For example, validation ensures that things like vibration or weather do not influence sensor values that are later to be explained by the diagnosis system.

The mode of the first component may be identified 307a. The component mode may take into account different regimes of functioning of the component or the overall system: for example before reaching the working regime (aka "online"), a turbine goes through a "start-up" during which its speed reaches the cruising speed at which power output is optimal. The mode of functioning influences the diagnostic engine as the way components function in each mode is different. Incoming validated sensor data 303a may be constantly monitored 309a.

The validated sensor data 303a and its corresponding mode 307a, if any, are provided to a model-based diagnostic engine 311a and a data-driven diagnostic engine 313a. The model-based diagnostic engine 311a is a single component model and is specific to the first component. The model-based diagnostic engine 311a may be obtained from a domain expert and formalized as a set of logical rules describing how the system should perform, the set of constraints it should obey, etc. For example, one can say about a pressure valve that if it is open, then the pressure downstream from it should increase. Any other reading would mean a malfunction. The model-based engine can identify that a fault occurred (like in the previous example) and can diagnose the fault by identifying the component(s) that could have produced it. Some systems may even provide possible diagnostic steps that would remedy the situation.

The data-driven engine 313a may be learned from sensor data annotated as either faulty or normal and may produce as output such faulty or normal findings for unseen sensor data.

In parallel with the process performed on the sensor data 303a, sensor data 303x is received at the diagnostic system and validated 305x. The sensor data 303x is provided from a sensor connected with another component (e.g., a second component) of the plurality of components of the turbine system. The mode of the second component may be identified 307x and incoming validated sensor data 303x may be constantly monitored 309x.

The validated sensor data 303x and its corresponding mode 307x, if any, are provided to a model-based diagnostic engine 311x and a data-driven diagnostic engine 313x. The model-based diagnostic engine 311x is specific to the second component. The data-driven diagnostic 313x engine is tuned to the second component.

An output 315a of the model-based diagnostic engine 311a and the data-driven diagnostic engine 313a is provided to a component abstraction module 317. Similarly, an output 315x of the model-based diagnostic engine 311x and the data-driven diagnostic engine 313x is provided to the component abstraction module 315.

Although the above description only discusses the two component outputs 315a and 315x being input to the component abstraction module 317, the number of component outputs received at the component abstraction module 317 is not limited thereto and can be much greater, Further, these outputs do not have to be received in parallel, but instead can be received at different times.

In response to the receipt of the component diagnosis 315a and 315x, the component abstraction module 317 aims to improve diagnostics by abstracting away from individual components and their behavior. One way to achieve this is to remove distinctions that are not important for the considered system. For example, two pipes connected to the input and output of a valve can be abstracted to just the valve.

The output of the component abstraction module 317 is provided to a model-based diagnostic engine 319 and a system diagnosis 321 output therefrom.

To help illustrate this diagnostic approach, a Water Tank Problem (WTP) will now be discussed. FIG. 4 is a schematic diagram illustrating the WTP. Here there are two tanks, a left tank 410 and a right tank 411. A single tap 412 is free to move between each tank to fill both tanks with water. Each tank has a hole at the bottom that loses water. The left tank 410 loses water at a rate of v1 while the right tank 411 loses water at a rate of v2. The tap 412 fills either tank at a rate w. For simplicity, it may be assumed that v1=v2=v and w>v. A command called "switch" may be used to move the tap to change tanks.

Sensor x1 is a Boolean sensor monitoring the state of the left tank 10 while sensor x2 is a Boolean sensor monitoring the state of the right tank 411. Sensors x 1 and x2 register a '1' when the water level in their respective tank increases and they register a '0' when the water level in their respective tank decreases.

Now assuming at time 1 the value of x1 is '1' and the value of x2 is '0'. This would indicate that the tap 412 is filling the left tank 410. Assuming the "switch" command is issued between time 1 and time 2, and at time 2, the values of x1 and x2 are still '1' and '0', respectively, the values of x1 and x2 are now considered to be abnormal as the system would have expected x1 to be at '0' and x2 to be at '1' after the switch. In this scenario, the tap 412 has become stuck over the left tank 410. However, as there is no sensor for the tap 412, this problem cannot be directly observed and thus a diagnosis is needed.

A model based engine employing non-monotonic reasoning may be used to examine the state of x1 and x2 together. The fact that x2 is decreasing and not increasing may indicate that the right tank 411 has failed, for example, due to a leak. However, when combined with the fact that x1 is increasing and not decreasing, it may be determined that it is the tap 412 that is malfunctioning. One example of a formalism that is capable of expressing such models is Satisfiability Modulo Theories (SMT). SMT is a decision problem for logical formulas with respect to combinations of background theories expressed in classical first-order logic. Advantages of using SMT include the ability to handle both discrete and continuous behaviors, for example.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article or manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Referring now to FIG. 5, according to an exemplary embodiment of the present invention, a computer system 501 can comprise, inter alia, a central processing unit (CPU) 502, a memory 503 and an input/output (I/O) interface 504. The computer system 501 is generally coupled through the I/O interface 504 to a display 505 and various input devices 506 such as a mouse and keyboard. The support circuits can include circuits such as cache, power supplies, clock circuits, and a communications bus. The memory 503 can include RAM, ROM, disk drive, tape drive, etc., or a combination thereof. Exemplary embodiments of present invention may be implemented as a routine 507 stored in memory 503 (e.g., a non-transitory computer-readable storage medium) and executed by the CPU 502 to process the signal from a signal source 508. As such, the computer system 501 is a general-purpose computer system that becomes a specific purpose computer system when executing the routine 507 of the present invention.

The computer system 501 also includes an operating system and micro-instruction code. The various processes and functions described herein may either be part of the micro-instruction code or part of the application program (or a combination thereof) which is executed via the operating system. In addition, various other peripheral devices may be connected to the computer system 501 such as an additional data storage device and a printing device.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions. The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A method of diagnosing a turbine system, comprising:
receiving sensor data (303a) of a first component of the turbine system using a sensor connected with the first component;
identifying (307a) a functioning mode of the first component;
inputting the sensor data and the mode of the first component into a first model-based diagnostic engine (311a), the first model-based diagnostic engine being a single-component model specific to the first component and being formalized as a set of logic rules describing how the turbine system should perform and identifying that a first fault occurred and diagnosing the first fault by identifying component(s)s that could have produced it, and into a first data-driven diagnostic engine (313a) learned from sensor data annotated as either faulty or normal to produce as output such faulty or normal findings to generate a first component diagnosis;
receiving (303x) sensor data of a second component of the turbine system using a sensor connected with the second component;
identifying (307x) a functioning mode of the second component;
inputting the sensor data and the mode of the second component into a second model-based diagnostic engine (311x), the second model-based diagnostic engine being a single-component model specific to the second component and being formalized as a set of logic rules describing how the turbine system should perform and identifying that a second fault occurred and diagnosing the second fault by identifying component(s)s that could have produced it and into a second data-driven diagnostic engine (313x) learned from sensor data annotated as either faulty or normal to produce as output such faulty or normal findings to generate a second component diagnosis;
generating (317) a component abstraction for the first component diagnosis and the second component diagnosis;
wherein the component abstraction improves diagnostics by abstracting away from individual components and their behaviour by removing distinctions of the respective component that are not important for the considered turbine system; and
inputting the component abstraction to a system model-based diagnostic engine (319) to generate a first diagnosis of the turbine system.

2. The method of claim 1, wherein the sensor data of the first component is provided from one or more sensors.

3. The method of claim 1, wherein the first component diagnosis is generated by integrating results of the first model-based diagnostic engine and the first data-driven diagnostic engine.

4. The method of claim 1, wherein the system model-based diagnostic engine uses non-monotonic reasoning.

5. The method of claim 4, wherein the system model-based diagnostic engine include models expressed with Satisfiability Modulo Theories, in particular wherein the system model-based diagnostic engine handles discrete and continuous behaviors.

6. The method of claim 1, further comprising:
receiving sensor data of a third component of the turbine system;
identifying a mode of the third component;
inputting the sensor data and the mode of the third component into a third model-based diagnostic engine and into a third data-driven diagnostic engine to generate a third component diagnosis;
generating a component abstraction also for the third component diagnosis; and inputting the component abstraction for the third component diagnosis also to the system model-based diagnostic engine to generate a second diagnosis of the turbine system.

7. The method of claim 1, wherein the first and second components are diagnosed in parallel.

8. A system for diagnosing a turbine system, comprising:
a) a memory device (503) for storing a program;
b) a processor (502) in communication with the memory device, the processor, when executing the program, being configured to:
receive sensor data (303a) of a first component of the turbine system using a sensor connected with the first component;
identify (307a) a functioning mode of the first component;
input the sensor data and the mode of the first component into a first model-based diagnostic engine (311a), the first model-based diagnostic engine being a single-component model specific to the first component and being formalized as a set of logic rules describing how the turbine system should perform and identifying that a first fault occurred and diagnosing the first fault by identifying component(s)s that could have produced it, and into a first data-driven diagnostic engine (313a) learned from sensor data annotated as either faulty or normal to produce as output such faulty or normal findings to generate a first component diagnosis;
receive (303x) sensor data of a second component of the turbine system using a sensor connected with the second component;
identify (307x) a functioning mode of the second component;
input the sensor data and the mode of the second component into a second model-based diagnostic engine (311x), the second model-based diagnostic engine being a single-component model specific to the second component and being formalized as a set of logic rules describing how the turbine system should perform and identifying that a second fault occurred and diagnosing the second fault by identifying component(s)s that could have produced it and into a second data-driven diagnostic engine (313x) learned from sensor data annotated as either faulty or normal to produce as output such faulty or normal findings to generate a second component diagnosis;
generate (317) a component abstraction for the first component diagnosis and the second component diagnosis;
wherein the component abstraction improves diagnostics by abstracting away from individual components and their behaviour by removing distinctions of the respective component that are not important for the considered turbine system; and
input the component abstraction to a system model-based diagnostic engine (319) to generate a first diagnosis of the turbine system.

9. The system of claim 8, wherein the sensor data of the first component is provided from one or more sensors.

10. The system of claim 8, wherein the first component diagnosis is generated by integrating results of the first model-based diagnostic engine and the first data-driven diagnostic engine.

11. The system of claim 8, wherein the system model-based diagnostic engine uses non-monotonic reasoning.

12. The system of claim 11, wherein the system model-based diagnostic engine include models expressed with Satisfiability Modulo Theories in particular wherein the system model-based diagnostic engine handles discrete and continuous behaviors.

13. The system of claim 8, wherein the processor is further operative with the program to:
receive sensor data of a third component of the turbine system;
identify a mode of the third component;
input the sensor data and the mode of the third component into a third model-based diagnostic engine and into a third data-driven diagnostic engine to generate a third component diagnosis;
generate a component abstraction also for the third component diagnosis; and also input the component abstraction for the third component diagnosis to the system model-based diagnostic engine to generate a second diagnosis of the turbine system.

14. The system of claim 8, wherein the first and second components are diagnosed in parallel.

15. A computer program product for diagnosing a turbine system, comprising:
a non-transitory computer readable storage medium comprising instructions which, when executed by a computer, cause the computer to carry out the method of any of claims 1-7.

## Patentansprüche

1. Verfahren zum Diagnostizieren eines Turbinensystems, das Folgendes umfasst:
Empfangen von Sensordaten (303a) einer ersten Komponente des Turbinensystems unter Verwendung eines mit der ersten Komponente verbundenen Sensors;
Identifizieren (307a) eines funktionierenden Modus der ersten Komponente;
Eingeben der Sensordaten und des Modus der ersten Komponente in eine erste modellbasierte Diagnoseengine (311a), wobei die erste modellbasierte Diagnoseengine ein Einzelkomponentenmodell spezifisch für die erste Komponente ist und als eine Menge von logischen Regeln formalisiert ist, die beschreiben, wie das Turbinensystem arbeiten soll, und die identifizieren, dass ein erster Fehler aufgetreten ist, und die den ersten Fehler durch Identifizieren der Komponente(n), die diesen produziert haben kann bzw. können, diagnostizieren, und in eine erste datengesteuerte Diagnoseengine (313a), die aus Sensordaten angelernt wird, die als entweder fehlerhaft oder normal gekennzeichnet sind, um als Ausgabe solche fehlerhaften oder normalen Ergebnisse zu produzieren, um eine Diagnose der ersten Komponente zu erzeugen;
Empfangen (30x) von Sensordaten einer zweiten Komponente des Turbinensystems unter Verwendung eines mit der zweiten Komponente verbundenen Sensors;
Identifizieren (307x) eines funktionierenden Modus der zweiten Komponente;
Eingeben der Sensordaten und des Modus der zweiten Komponente in eine zweite modellbasierte Diagnoseengine (311x), wobei die zweite modellbasierte Diagnoseengine ein Einzelkomponentenmodell spezifisch für die zweite Komponente ist und als eine Menge von logischen Regeln formalisiert ist, die beschreiben, wie das Turbinensystem arbeiten soll, und die identifizieren, dass ein zweiter Fehler aufgetreten ist, und die den zweiten Fehler durch Identifizieren der Komponente(n), die diesen produziert haben kann bzw. können, diagnostizieren, und in eine zweite datengesteuerte Diagnoseengine (313x), die aus Sensordaten angelernt wird, die als entweder fehlerhaft oder normal gekennzeichnet sind, um als Ausgabe solche fehlerhaften oder normalen Ergebnisse zu produzieren, um eine Diagnose der zweiten Komponente zu erzeugen;
Erzeugen (317) einer Komponentenabstraktion für die Diagnose der ersten Komponente und die Diagnose der zweiten Komponente; wobei die Komponentenabstraktion die Diagnose verbessert durch Abstrahieren weg von den einzelnen Komponenten und ihrem Verhalten durch Entfernen von Unterschieden der entsprechenden Komponenten, die für das betrachtete Turbinensystem unwichtig sind; und
Eingeben der Komponentenabstraktion in eine systemmodellbasierte Diagnoseengine (319) zum Erzeugen einer ersten Diagnose des Turbinensystems.

2. Verfahren nach Anspruch 1, wobei die Sensordaten der ersten Komponente von einem oder mehreren Sensoren bereitgestellt werden.

3. Verfahren nach Anspruch 1, wobei die Diagnose der ersten Komponente erzeugt wird durch Integrieren der Ergebnisse der ersten modellbasierten Diagnoseengine und der ersten datengesteuerten Diagnoseengine.

4. Verfahren nach Anspruch 1, wobei die systemmodellbasierte Diagnoseengine nicht-monotones Schlussfolgern verwendet.

5. Verfahren nach Anspruch 4, wobei die systemmodellbasierte Diagnoseengine Modelle umfasst, die mit Satisfiability-Modulo-Theorien ausgedrückt werden, wobei insbesondere die systemmodellbasierte Diagnoseengine diskretes und kontinuierliches Verhalten behandelt.

6. Verfahren nach Anspruch 1, das ferner umfasst:
Empfangen von Sensordaten einer dritten Komponente des Turbinensystems;
Identifizieren eines Modus der dritten Komponente;
Eingeben der Sensordaten und des Modus der dritten Komponente in eine dritte modellbasierte Diagnoseengine und in eine dritte datengesteuerte Diagnoseengine zum Erzeugen einer Diagnose der dritten Komponente;
Erzeugen einer Komponentenabstraktion auch für die Diagnose der dritten Komponente; und Eingeben der Komponentenabstraktion für die Diagnose der dritten Komponente auch in die systemmodellbasierte Diagnoseengine zum Erzeugen einer zweiten Diagnose des Turbinensystems.

7. Verfahren nach Anspruch 1, wobei die erste und die zweite Komponente parallel diagnostiziert werden.

8. System zum Diagnostizieren eines Turbinensystems, das Folgendes umfasst:
a) eine Speichervorrichtung (503) zum Speichern eines Programms;
b) einen Prozessor (502) in Kommunikation mit der Speichervorrichtung, wobei der Prozessor, wenn er das Programm ausführt, ausgelegt ist zum:
Empfangen von Sensordaten (303a) einer ersten Komponente des Turbinensystems unter Verwendung eines mit der ersten Komponente verbundenen Sensors;
Identifizieren (307a) eines funktionierenden Modus der ersten Komponente;
Eingeben der Sensordaten und des Modus der ersten Komponente in eine erste modellbasierte Diagnoseengine (311a), wobei die erste modellbasierte Diagnoseengine ein Einzelkomponentenmodell spezifisch für die erste Komponente ist und als eine Menge von logischen Regeln formalisiert ist, die beschreiben, wie das Turbinensystem arbeiten soll, und die identifizieren, dass ein erster Fehler aufgetreten ist, und die den ersten Fehler durch Identifizieren der Komponente(n), die diesen produziert haben kann bzw. können, diagnostizieren, und in eine erste datengesteuerte Diagnoseengine (313a), die aus Sensordaten angelernt wird, die als entweder fehlerhaft oder normal gekennzeichnet sind, um als Ausgabe solche fehlerhaften oder normalen Ergebnisse zu produzieren, um eine Diagnose der ersten Komponente zu erzeugen;
Empfangen (303x) von Sensordaten einer zweiten Komponente des Turbinensystems unter Verwendung eines mit der zweiten Komponente verbundenen Sensors;
Identifizieren (307x) eines funktionierenden Modus der zweiten Komponente;
Eingeben der Sensordaten und des Modus der zweiten Komponente in eine zweite modellbasierte Diagnoseengine (311x), wobei die zweite modellbasierte Diagnoseengine ein Einzelkomponentenmodell spezifisch für die zweite Komponente ist und als eine Menge von logischen Regeln formalisiert ist, die beschreiben, wie das Turbinensystem arbeiten soll, und die identifizieren, dass ein zweiter Fehler aufgetreten ist, und die den zweiten Fehler durch Identifizieren der Komponente(n), die diesen produziert haben kann bzw. können, diagnostizieren, und in eine zweite datengesteuerte Diagnoseengine (313x), die aus Sensordaten angelernt wird, die als entweder fehlerhaft oder normal gekennzeichnet sind, um als Ausgabe solche fehlerhaften oder normalen Ergebnisse zu produzieren, um eine Diagnose der zweiten Komponente zu erzeugen;
Erzeugen (317) einer Komponentenabstraktion für die Diagnose der ersten Komponente und die Diagnose der zweiten Komponente;
wobei die Komponentenabstraktion die Diagnose verbessert durch Abstrahieren weg von den einzelnen Komponenten und ihrem Verhalten durch Entfernen von Unterschieden der entsprechenden Komponenten, die für das betrachtete Turbinensystem unwichtig sind; und
Eingeben der Komponentenabstraktion in eine systemmodellbasierte Diagnoseengine (319) zum Erzeugen einer ersten Diagnose des Turbinensystems.

9. System nach Anspruch 8, wobei die Sensordaten der ersten Komponente von einem oder mehreren Sensoren bereitgestellt werden.

10. System nach Anspruch 8, wobei die Diagnose der ersten Komponente erzeugt wird durch Integrieren der Ergebnisse der ersten modellbasierten Diagnoseengine und der ersten datengesteuerten Diagnoseengine.

11. System nach Anspruch 8, wobei die systemmodellbasierte Diagnoseengine nicht-monotones Schlussfolgern verwendet.

12. System nach Anspruch 11, wobei die systemmodellbasierte Diagnoseengine Modelle umfasst, die mit Satisfiability-Modulo-Theorien ausgedrückt werden, wobei insbesondere die systemmodellbasierte Diagnoseengine diskretes und kontinuierliches Verhalten behandelt.

13. System nach Anspruch 8, wobei der Prozessor ferner mit dem Programm betreibbar ist zum:
Empfangen von Sensordaten einer dritten Komponente des Turbinensystems;
Identifizieren eines Modus der dritten Komponente;
Eingeben der Sensordaten und des Modus der dritten Komponente in eine dritte modellbasierte Diagnoseengine und in eine dritte datengesteuerte Diagnoseengine zum Erzeugen einer Diagnose der dritten Komponente;
Erzeugen einer Komponentenabstraktion auch für die Diagnose der dritten Komponente; und auch Eingeben der Komponentenabstraktion für die Diagnose der dritten Komponente in die systemmodellbasierte Diagnoseengine zum Erzeugen einer zweiten Diagnose des Turbinensystems.

14. System nach Anspruch 8, wobei die erste und die zweite Komponente parallel diagnostiziert werden.

15. Computerprogrammprodukt zum Diagnostizieren eines Turbinensystems, das Folgendes umfasst: ein nicht-flüchtiges computerlesbares Speichermedium, umfassend Anweisungen, die, wenn durch einen Computer ausgeführt, den Computer veranlassen, das Verfahren aus einem der Ansprüche 1-7 durchzuführen.

## Revendications

1. Procédé de diagnostic d'un système de turbine, consistant à :
recevoir des données de capteur (303a) d'un premier composant du système de turbine au moyen d'un capteur connecté au premier composant ;
identifier (307a) un mode de fonctionnement du premier composant ;
entrer les données de capteur et le mode du premier composant dans un premier moteur de diagnostic basé sur un modèle (311a), le premier moteur de diagnostic basé sur un modèle étant un modèle monocomposant spécifique du premier composant et se présentant sous la forme d'un ensemble de règles logiques décrivant comment le système de turbine doit fonctionner, identifiant qu'un premier défaut s'est produit et diagnostiquant le premier défaut en identifiant le ou les composants qui peuvent en être à l'origine, et dans un premier moteur de diagnostic guidé par des données (313a) ayant réalisé son apprentissage à partir de données notées comme étant défectueuses ou normales pour produire en sortie des résultats dits défectueux ou normaux pour générer un premier diagnostic de composant ;
recevoir (303x) des données de capteur d'un deuxième composant du système de turbine au moyen d'un capteur connecté au deuxième composant ;
identifier (307x) un mode de fonctionnement du deuxième composant ;
entrer les données de capteur et le mode du deuxième composant dans un deuxième moteur de diagnostic basé sur un modèle (311x), le deuxième moteur de diagnostic basé sur un modèle étant un modèle monocomposant spécifique du deuxième composant et se présentant sous la forme d'un ensemble de règles logiques décrivant comment le système de turbine doit fonctionner, identifiant qu'un second défaut s'est produit et diagnostiquant le second défaut en identifiant le ou les composants qui peuvent en être à l'origine, et dans un deuxième moteur de diagnostic guidé par des données (313x) ayant réalisé son apprentissage à partir de données notées comme étant défectueuses ou normales pour produire en sortie des résultats dits défectueux ou normaux pour générer un deuxième diagnostic de composant ;
générer (317) une abstraction de composant pour le premier diagnostic de composant et le deuxième diagnostic de composant ;
l'abstraction de composant améliorant des diagnostics en faisant l'abstraction de composants individuels et de leur comportement en éliminant des distinctions du composant respectif qui ne sont pas importantes pour le système de turbine considéré ; et
entrer l'abstraction de composant dans un moteur de diagnostic basé sur un modèle de système (319) pour générer un premier diagnostic du système de turbine.

2. Procédé selon la revendication 1, dans lequel les données de capteur du premier composant sont fournies par un ou plusieurs capteurs.

3. Procédé selon la revendication 1, dans lequel le premier diagnostic de composant est généré en intégrant des résultats du premier moteur de diagnostic basé sur un modèle et du premier moteur de diagnostic guidé par des données.

4. Procédé selon la revendication 1, dans lequel le moteur de diagnostic basé sur un modèle de système utilise un raisonnement non monotone.

5. Procédé selon la revendication 4, dans lequel le moteur de diagnostic basé sur un modèle de système inclut des modèles exprimés avec Satisfaisabilité Modulo Théories, en particulier dans lequel le moteur de diagnostic basé sur un modèle de système gère des comportements discrets et continus.

6. Procédé selon la revendication 1, dans lequel en outre :
recevoir des données de capteur d'un troisième composant du système de turbine ;
identifier un mode du troisième composant ;
entrer les données de capteur et le mode du troisième composant dans un troisième moteur de diagnostic basé sur un modèle et dans un troisième moteur de diagnostic guidé par des données pour générer un troisième diagnostic de composant ;
générer également une abstraction de composant pour le troisième diagnostic de composant ; et
entrer également l'abstraction de composant pour le troisième diagnostic de composant dans le moteur de diagnostic basé sur un modèle de système pour générer un second diagnostic du système de turbine.

7. Procédé selon la revendication 1, dans lequel les premier et deuxième composants sont diagnostiqués en parallèle.

8. Système de diagnostic d'un système de turbine, comprenant :
a) un dispositif de mémoire (503) pour stocker un programme ;
b) un processeur (502) en communication avec le dispositif de mémoire, le processeur, lorsqu'il exécute le programme, étant configuré pour :
recevoir des données de capteur (303a) d'un premier composant du système de turbine au moyen d'un capteur connecté au premier composant ;
identifier (307a) un mode de fonctionnement du premier composant ;
entrer les données de capteur et le mode du premier composant dans un premier moteur de diagnostic basé sur un modèle (311a), le premier moteur de diagnostic basé sur un modèle étant un modèle monocomposant spécifique du premier composant et se présentant sous la forme d'un ensemble de règles logiques décrivant comment le système de turbine doit fonctionner, identifiant qu'un premier défaut s'est produit et diagnostiquant le premier défaut en identifiant le ou les composants qui peuvent en être à l'origine, et dans un premier moteur de diagnostic guidé par des données (313a) ayant réalisé son apprentissage à partir de données notées comme étant défectueuses ou normales pour produire en sortie des résultats dits défectueux ou normaux pour générer un premier diagnostic de composant ;
recevoir (303x) des données de capteur d'un deuxième composant du système de turbine au moyen d'un capteur connecté au deuxième composant ;
identifier (307x) un mode de fonctionnement du deuxième composant ;
entrer les données de capteur et le mode du deuxième composant dans un deuxième moteur de diagnostic basé sur un modèle (311x), le deuxième moteur de diagnostic basé sur un modèle étant un modèle monocomposant spécifique du deuxième composant et se présentant sous la forme d'un ensemble de règles logiques décrivant comment le système de turbine doit fonctionner, identifiant qu'un second défaut s'est produit et diagnostiquant le second défaut en identifiant le ou les composants qui peuvent en être à l'origine, et dans un deuxième moteur de diagnostic guidé par des données (313x) ayant réalisé son apprentissage à partir de données notées comme étant défectueuses ou normales pour produire en sortie des résultats dits défectueux ou normaux pour générer un deuxième diagnostic de composant ;
générer (317) une abstraction de composant pour le premier diagnostic de composant et le deuxième diagnostic de composant ;
l'abstraction de composant améliorant des diagnostics en faisant l'abstraction de composants individuels et de leur comportement en éliminant des distinctions du composant respectif qui ne sont pas importantes pour le système de turbine considéré ; et
entrer l'abstraction de composant dans un moteur de diagnostic basé sur un modèle de système (319) pour générer un premier diagnostic du système de turbine.

9. Système selon la revendication 8, dans lequel les données de capteur du premier composant sont fournies par un ou plusieurs capteurs.

10. Système selon la revendication 8, dans lequel le premier diagnostic de composant est généré en intégrant des résultats du premier moteur de diagnostic basé sur un modèle et du premier moteur de diagnostic guidé par des données.

11. Système selon la revendication 8, dans lequel le moteur de diagnostic basé sur un modèle de système utilise un raisonnement non monotone.

12. Système selon la revendication 11, dans lequel le moteur de diagnostic basé sur un modèle de système inclut des modèles exprimés avec Satisfaisabilité Modulo Théories, en particulier dans lequel le moteur de diagnostic basé sur un modèle de système gère des comportements discrets et continus.

13. Système selon la revendication 8, dans lequel le processeur sert en outre, conjointement avec le programme, à :
recevoir des données de capteur d'un troisième composant du système de turbine ;
identifier un mode du troisième composant ;
entrer les données de capteur et le mode du troisième composant dans un troisième moteur de diagnostic basé sur un modèle et dans un troisième moteur de diagnostic guidé par des données pour générer un troisième diagnostic de composant ;
générer également une abstraction de composant pour le troisième diagnostic de composant ; et
entrer également l'abstraction de composant pour le troisième diagnostic de composant dans le moteur de diagnostic basé sur un modèle de système pour générer un second diagnostic du système de turbine.

14. Système selon la revendication 8, dans lequel les premier et deuxième composants sont diagnostiqués en parallèle.

15. Produit de programme informatique pour le diagnostic d'un système de turbine, comprenant :
un support de stockage non temporaire lisible par ordinateur comprenant des instructions qui, lorsqu'elles sont exécutées par un ordinateur, amènent l'ordinateur à réaliser le procédé selon l'une quelconque des revendications 1 à 7.
